Europäisches Patentamt

European Patent Office

Office européen des brevets

(19)

(11) Publication number: **0 007 190**
**A1**

(12) **EUROPEAN PATENT APPLICATION**

(21) Application number: **79301201.4**

(22) Date of filing: **21.06.79**

(51) Int. Cl.³: **C 08 K 9/04**

(30) Priority: **11.07.78 GB 2942178**

(43) Date of publication of application:
**23.01.80 Bulletin 80/2**

(84) Designated Contracting States:
**AT BE DE FR GB IT NL**

(71) Applicant: **IMPERIAL CHEMICAL INDUSTRIES LIMITED**
**Imperial Chemical House Millbank**
**London SW1P 3JF(GB)**

(72) Inventor: **Birchall, James Derek**
**Braeside Stable Lane**
**Mouldsworth, Cheshire(GB)**

(72) Inventor: **Hutchinson, John**
**30 Springbourne**
**Frodsham, Cheshire(GB)**

(74) Representative: **Walmsley, David Arthur**
**Gregson et al,**
**Imperial Chemical Industries Limited Legal department:**
**Patents Thames House North Millbank**
**London SW1P 4QG(GB)**

(54) Polymer-coated siliceous fillers for use in plastics or rubbers.

(57) Process for production of a coated particulate filler by contacting the surface of a siliceous filler, e.g. silica or a metal silicate, with an unsaturated acidic group-containing organic polymer, e.g. a polydiene carboxylic acid or carboxylic acid anhydride, and, polymer compositions, e.g. plastic or rubber compositions, containing the coated particulate filler.

EP 0 007 190 A1

Croydon Printing Company Ltd

1.

POLYMER-COATED SILICEOUS FILLER FOR USE IN PLASTICS OR RUBBERS.

This invention relates to novel polymer-coated siliceous fillers, to a process for producing the fillers, and to polymer compositions containing the fillers.

It is well known to modify the properties of a wide variety of organic polymers, e.g. plastics or rubbers, by incorporating into such polymers one or more inorganic materials in finely divided form. These inorganic materials, commonly known as fillers, may serve either to increase the bulk of the resultant polymer composition so as to permit a polymer to be used more economically, or to enhance at least some of the physical properties of the polymer, for example the hardness, modulus, tensile strength, or resistance to wear of the polymer.

Not only is it desirable to make such fillers as compatible as possible with organic polymers but it is also desirable to be able to make compositions containing high proportions of inorganic material so as to confer the physical and cost advantages of the inorganic material on the resulting composition to the maximum practicable extent. It is especially desirable, when considering possible shortages of hydrocarbon raw materials to be able to use cheap and readily available inorganic raw materials as much as possible.

In our copending application British Patent Application No 22277/77 (Belgian Patent No 867 333) we have described a process for the production of a coated particulate filler which process comprises binding to the surface of a basic particulate filler an acidic group-containing organic polymer, which polymer contains at least one unsaturated group. It is believed that in this process the acidic group-containing organic polymer reacts with the basic groups on the particulate filler and thereby becomes bound to the surface of the filler.

When such a coated filler is mixed with an organic polymer to form a polymer composition, or is formed in situ in a polymer composition, we find that the properties, e.g. the tensile properties and tear strength, of the composition are superior to the properties of a similar filled composition in which the filler which has been used does not contain a coating of the acidic group-containing organic polymer.

We have now found that a polymer composition comprising an organic polymer, e.g. a plastic or rubber, and a siliceous filler which filler has been contacted with an acidic group-containing organic polymer, either in situ in the polymer composition or before formation of the polymer composition, possesses properties, e.g. tensile properties and tear strength, superior to the properties of a composition comprising an organic polymer and a siliceous filler which filler has not been contacted with an acidic group-containing organic polymer. This is particularly surprising as the siliceous filler contains no basic group, or at most only a very small proportion of such groups, and thus the acidic group-containing organic polymer would not be expected to become bound to the surface of the siliceous filler by reaction with the acidic groups in the acidic group-containing organic polymer.

According to the present invention there is provided a process for the production of a coated particulate filler characterised in that the process comprises contacting the surface of a particulate siliceous filler with an acidic group-containing organic polymer, which polymer contains at least one unsaturated group.

Within the scope of the term "polymer" in the expression "acidic group-containing organic polymer" we include oligomers.

The number of repeat units may be sufficiently low that the polymer (or oligomer) is a liquid.

Within the scope of the term "acidic group" we include not only organic polymers containing acidic groups in the form of the free acid but also salts of acidic groups and groups convertible to free acid groups under the process conditions.

The invention also provides a siliceous particulate filler the surface of which is coated with an acidic group-containing organic polymer which polymer contains at least one unsaturated group.

The products of our invention have some of the properties of the filler particles from which

they are derived, and in addition have high compatibility with organic polymers and impart a valuable strengthening of the ultimate association of the filler with the matrix organic polymer in the polymer composition in which they are incorporated. The products also have the valuable property of being very much more readily mixed with an organic polymer than does the unmodified filler.

According to a further embodiment of the invention there is provided a polymer composition comprising a matrix organic polymer having incorporated therein a siliceous particulate filler the surface of which is coated with an organic polymer containing at least one unsaturated group.

Any siliceous particulate filler may be used in the process of the invention provided that the filler contains a substantial proportion of silica, that is greater than 25% by weight of silica. The filler may be silica itself, for example, fine particle size silica prepared by acidification of an alkali metal silicate solution. Alternatively, the siliceous filler may contain silica in the form of a metal silicate, for example, the filler may be a silicate of aluminium, iron or magnesium. Thus, the siliceous filler may be a kaolin mineral, e.g. kaolinite, dickite or nacrite having the formula $Al_2O_3$ $2SiO_2$ $2H_2O$, anauxite $Al_2O_3$ $3SiO_2$ $2H_2O$, halloysite $Al_2O_3$ $2SiO_2$ $2H_2O$, or endeclite $Al_2O_3$ $2SiO_2$ $4H_2O$. Other suitable siliceous fillers include the montmorillonite minerals, e.g. montmorillonite

$[Al_{1.67} Mg_{0.33}(Na_{0.33})] Si_4O_{.0} (OH)_2$

and natronite $Fe^{3+}_{2.0} [Al_{0.33} (Na_{0.33}) Si_{3.67}] O_{10} (OH)_2$.

The filler particles for use in the invention may have any form suitable for a filler, and may have a wide variety of particle shapes and sizes. For example, they may be of substantially spherical shape, though they may if desired be of fibrillar or laminar form.

Most commonly the filler particles will have a size in the range 40 Angstrom to 1 mm, though we prefer that the particle size is in the range 40 Angstrom to 1000 Angstrom, for example about 200 Angstrom.

Most conveniently the siliceous particulate filler is in the form of a finely divided, free flowing powder, and this is the form in which such fillers are usually available in commerce.

The acidic group-containing organic polymer with which the siliceous particulate filler is coated in the process of the invention should contain at least one acidic group per molecule. Suitable acidic groups include carboxylic acid groups. The acidic group-containing organic polymer may contain on average more than one acidic group per molecule and indeed it is preferred that the polymer does contain more than one such group per molecule as in general the greater is the number of such groups per molecule the more likely is the polymer to be water soluble thus permitting the process of the invention to be effected in an aqueous medium.

Water solubility of the acidic group-containing polymer, e.g. a carboxylic acid group-contain-

ing polymer, may be increased by forming a salt of the acidic group, for example, an alkali metal salt, an ammonium salt, or a trialkyl ammonium salt. An example of a group convertible to a free acid group under the process conditions is a carboxylic acid anhydride group which may be hydrolysed to a free acid in the process, particularly where the process is effected in an aqueous medium.

The acidic group-containing organic polymer also contains at least one unsaturated group per molecule, e.g. an ethylenically unsaturated group. The group should be capable of participating in a cross-linking reaction. The polymer preferably contains a plurality of unsaturated groups. The unsaturated group capable of participating in cross-linking is preferably part of a polydiene structure, that is a polymer derived from a diene, but may be part of a polymer structure of other derivation if desired. Examples of polydiene structures are polymers or copolymers derived from one or more dienes, of which the most conveniently available is butadiene, though others may be used if desired, for example isoprene, chloroprene (chlorobutadiene) or mixtures thereof. Examples of other compounds which may be copolymerised with the diene or dienes include a wide range of vinyl monomers, for example styrene, acrylonitrile, and mixtures thereof.

Suitable acidic group-containing organic polymers include polydiene carboxylic acids or carboxylic acid anhydrides and polydiene polycarboxylic acids, especially dicarboxylic acid polydienes, e.g. polybutadiene dicarboxylic acid. Such polydiene carboxylic acids may be prepared by reacting a polydiene e.g. polybutadiene, polyisoprene, or natural rubber, with mercapto-acetic acid, by oxidising unsaturated groups in a polydiene, or by copolymerising a diene with an unsaturated monomer containing a carboxylic acid. group or a group which is capable of being converted into such a group. For example, a diene, e.g. butadiene or isoprene, may be copolymerised with vinyl acetate and the acetate groups in the resultant copolymer may be hydrolysed to carboxylic acid groups. An acid group-containing organic polymer may also be prepared by reacting an unsaturated polymer, e.g. a polydiene, with maleic anhydride.

The acidic group-containing organic polymer is preferably one which has a molecular weight in the range 200 to 1,000,000, more preferably in the range 200 - 50,000, and particularly in the range 1000 to 5000. It is also preferred that the acidic group-containing organic polymer is liquid at ambient temperature.

The process of the invention is carried out by forming a mixture of the siliceous particulate filler and the acidic group-containing organic polymer. The mixture may be heated although heating may not be necessary especially where a solvent for the polymer is used and/or the polymer is liquid. Thus, the coating may be carried out at a temperature over a wide range, depending upon the materials used but at high temperatures the risk of the decomposition of the acidic group-containing organic polymer tends to increase. Thus the coating is preferably effected at a temperature in the range 0°C to 200°C, though other temperatures may be used if desired. The optimum conditions may be determined by simple trial. The time required also depends upon the materials and the conditions employed, but commonly is in the range 1 minute to 6 hours. The coating may be carried out most conveniently at ambient pressure, though higher or lower pressures may be used if desired.

The coating of the siliceous particulate filler may be further assisted in several ways. For example, the mixture may be stirred or it may be milled, e.g. in a ball mill. Also a solvent for the acidic group-containing organic polymer may be used. The solvent may serve several useful functions; thus, it may reduce the viscosity of the acidic group-containing organic polymer, improve the ease and evenness of the spreading of the polymer over the surface of the siliceous filler particles, promote the intimate contact and interaction between the components, assist in controlling the temperature of the mixture, or assist in preventing degradation of the polymer by excluding oxygen from it.

In general, the solvent should be one which dissolves the polymer sufficiently to adjust its viscosity to the desired extent, and it should be chemically inert towards the polymer and the siliceous filler; it is especially desirable that it should be inert towards the siliceous filler so that it is not preferentially adsorbed thereon to an extent which appreciably diminishes the affinity of the polymer for the surface of the siliceous filler particles.

Examples of organic solvents include hydrocarbons (aliphatic, aromatic, araliphatic or cycloaliphatic) for example toluene, xylene and petroleum fractions; halogenated (and especially chlorinated) hydrocarbons, for example methylene chloride, chloroform, carbon tetrachloride, 1,2-dichloroethane, trichloroethylene and tetrachloroethylene; ethers for example diethyl ether; and mixtures thereof. The choice of solvent will be guided by such factors as low flammability, low toxicity, and boiling point, which may be significant both in use and in the removal of the solvent from the treated particulate filler.

A preferred solvent for the acidic group-containing organic polymer is water on account of its ease of handling, its low cost, and the absence of toxicity problems.

The nature of the solvent which is used will have a bearing on the number of acidic groups in the acidic group-containing organic polymer and on the molcular weight of the polymer. Thus, as organic polymers are generally readily soluble in organic solvents the desired concentration of the acidic group-containing organic polymer in an organic solvent may be achieved even where the molecular weight of the polymer varies over a wide range, e.g. over a range of 200 to 1,000,000. Also, as the acidic groups in the polymer may in general have little effect on the solubility in organic solvents the number of such groups per molecule is generally not critical. On the other hand, where water is used as a solvent the molecular weight and the number of acidic groups per molecule is much more critical. As organic polymers are generally at most only sparingly soluble in water, and as the solubility generally decreases as the molecular weight of the polymer increases, low molecular weight acidic group-containing organic polymers are preferred where water is used as a solvent. A molecular weight in the range 200 - 50,000 is preferred. Especially preferred is a molecular weight of 1000-5000. As the water-solubility of the polymer will tend to increase with an increase in the number of acidic groups per molecule a plurality of acidic groups is preferred where water is used as a solvent. For a polymer of given molecular weight the number of acidic groups needed to achieve the desired water solubility may be determined experimentally. The precise number will depend on the particular polymer and the molecular weight chosen, and on the concentration of acidic group-containing organic polymer which is desired in the aqueous solution. Acidic groups in the form of salts may also serve to improve the water solubility of the polymer.

The proportion of solvent should be sufficient to dissolve the acidic group-containing organic polymer, as incomplete solution may result in undesirable local concentration of unbound polymer, and be sufficient to produce a solution which can readily flow and mix with the siliceous filler particles. Suitable proportions can be determined by simple trial and are not necessarily critical.

It is also important that the amount of solution containing the acidic group-containing organic polymer which is used should be sufficient to cover the surface of the siliceous filler particles as thoroughly as possible if the best products, that is the most useful fillers are to result. Conveniently an excess of solution sufficient to produce a thoroughly wetted mixture may be used. The coated particulate filler may be separated from the solution and dried.

The process may be carried out in the presence of protecting agents, e.g. antioxidants, and/or in an inert atmosphere, e.g. nitrogen, argon or solvent vapour, if it is desired to guard against deterioration of the acidic group-containing organic polymer during any heating that may be necessary.

The proportion of the acidic group-containing organic polymer and the siliceous filler particles may be varied within wide limits according to the particular materials employed and the properties desired in the product and in the polymer composition in which the coated filler particles may ultimately be incorporated.

Commonly, the coated siliceous filler particles contain in the range 0.2% to 40% by weight of the organic polymer and correspondingly 99.8 to 60% by weight of the particulate filler, though products having proportions outside this range may be made if desired. Preferred proportions are in the range 1% to 20% by weight of the organic polymer and correspondingly 99% to 80% by weight of siliceous particulate filler.

When the acidic group-containing organic polymer has been coated on the surface of the siliceous filler particles, the resulting product may be in a form in which it can be used directly as a filler or it may need to be treated mechanically, e.g. by grinding, to break up agglomerates and reduce the filler to a suitably small particle size. This is not essential in all cases, however, as any necessary breakdown of the agglomerates may take place satisfactorily while the filler is being incorporated into a polymer composition, for example by milling.

As the organic polymer which is coated on the surface of the particulate filler contains at least one unsaturated group the filler, when incorporated in an organic polymer composition, may be caused to react with the latter polymer through the unsaturated group, especially where the latter matrix organic polymer itself contains such a group, e.g. where the organic polymer is a curable, that is a vulcanisable, rubber.
As a result of this reaction the filler may be caused to be bound to the organic matrix polymer in which it is incorporated with the result that the polymer composition in which the filler is incorporated will have properties superior to those of a polymer composition containing a filler which has been coated with an acidic group-containing organic polymer which does not contain unsaturation.

Where the organic matrix polymer with which the filler is mixed and into which it is incorporated does not itself contain unsaturation reaction of this organic polymer with the unsaturated organic polymer on the surface of the filler particles may be caused to take place by generating free radials during the mixing operation, for example by shearing the mixture or by including a free radial generator in the mixture.

The matrix organic polymer into which the products of our invention may be incorporated may be in any convenient form and incorporation may be carried out by conventional mixing means. This polymer may be a thermosetting resin, e.g. a polyester resin, or it may be a thermoplastic. It is preferably a polymer containing unsaturation and which is thus curable (vulcanisable).

The matrix organic polymer may be a massive or particulate plastic or rubbery material, into which the filler may be incorporated by mechanical action, for example milling.

Chemically, the matrix organic polymer may be of widely varying constitution and may be for example any natural or synthetic rubber or resin known in the art to be usable in conjunction with a filler. The products of the invention are especially useful as fillers in natural or synthetic rubbers, for example butadiene-based rubbers, e.g. butadiene-styrene and butadiene-acrylonitrile rubbers, polybutadiene, polyisoprene, and natural rubber.

The polymer composition may also be produced by mixing an organic polymer with a siliceous particulate filler and with an acidic group-containing organic polymer which also contains at least one unsaturated group.

It is believed that during the mixing process the siliceous filler particles associate with the acidic group-containing organic polymer. It is not necessary for all of the acidic group-containing polymer to associate with the siliceous particulate filler during the mixing operation. Indeed the association may not take place as readily as in the case where siliceous particulate filler is coated with the acidic group-containing organic polymer in the absence of a matrix organic polymer, for example when mixed in the presence of a liquid solvent for the acidic group-containing organic polymer, and it may be desirable to use in this process an amount of acidic group-containing organic polymer by weight of siliceous particulate filler which is greater than would normally be used.

The optimum proportion of coated filler to matrix organic polymer in which it is incorporated will be determined by the use to which the filled polymer is to be put. In general 5% to 30% of coated filler by weight of matrix organic polymer into which it is incorporated will suffice, preferably 10% to 200% by weight.

The polymer composition may also contain conventional additives, for example antioxidants, plasticisers, vulcanisation accelerators, pigments, antiozonants, and fillers other than those of the present invention.

The invention is illustrated by the following Examples in which all parts are expressed as parts by weight.

EXAMPLE 1

A polybutadiene - maleic anhydride adduct was prepared by reacting 100 parts of polybutadiene (Mn 3400) with 25 parts of maleic anhydride under an atmosphere of nitrogen and in the presence of

0007190

a small amount of xylene and antioxidant at a temperature of 190°C until little or no free maleic anhydride remained.

3 parts of the polybutadiene-maleic anhydride adduct prepared as described above were compounded on a twin-roll mill with 100 parts of styrene-butadiene rubber (SBR 1502), 3.5 parts of zinc oxide, 1.5 parts of stearic acid, 3.0 parts of sulphur, 2 parts of an accelerator Vulcafor F, 0.5 parts of an accelerator Vulcafor TMT and 100 parts of a siliceous clay (Clay 90A supplied by Huber).  Clay 90A is a kaolin clay and has an average particle diameter of 0.3 micron.

The compounded composition in the form of a sheet was cured by heating at a temperature of 160°C for 5 minutes.

In the following Table I are given the properties of the cured sheet, and for the sake of comparison the properties of a cured sheet prepared following the above described procedure except that in the comparative example the polybutadiene-maleic anhydride adduct was omitted and the cure time was 6 minutes.

### TABLE I

|  | Example 1 | Comparison |
|---|---|---|
| Tensile Strength Kg/cm$^2$ | 146 | 109 |
| 100% tensile modulus Kg/cm$^2$ | 65 | 36 |
| 200% tensile modulus Kg/cm$^2$ | 104 | 49 |
| 300% tensile modulus Kg/cm$^2$ | 129 | 62 |
| Elongation at break % | 384 | 506 |
| Tear Strength (angle)(Kg F/mm) | 4.6 | 4.03 |

EXAMPLE 2

The procedure of Example 1 was repeated except that there was used 4 parts of the polybutadiene-maleic anhydride adduct, in place of the siliceous clay there was used 40 parts of a silica filler having a specific surface area of $225m^2/g$ (Ultrasil VN3 supplied by I D Chemicals Ltd), and the composition also contained 2 parts of diethylene glycol. The procedure of the comparative example described in Example 1 was also repeated except that in the present comparative example 40 parts of silica filler (Ultrasil VN3) were used in place of the siliceous clay, and the composition also contained 2 parts of diethylene glycol.

The compounded compositions of Example 2 and of the comparative example in the form of sheets were cured by heating at a temperature of 140°C for 13.5 minutes and 12 minutes respectively.

The properties of the cured sheets are given in the following Table II.

TABLE II

|  | Example 2 | Comparison |
|---|---|---|
| Tensile Strength $Kg/cm^2$ | 116 | 72 |
| 100% tensile modulus $Kg/cm^2$ | 32 | 22 |
| 200% tensile modulus $Kg/cm^2$ | 56 | 33 |
| 300% tensile modulus $Kg/cm^2$ | 84 | 48 |
| Elongation at break % | 394 | 410 |
| Tear Strength (angle) (Kg F/mm) | 4.4 | 3.45 |

EXAMPLE 3

The procedure of Example 1 was repeated except that there was used 3.5 parts of polybutadiene-maleic anhydride adduct, in place of the siliceous clay there was used 70 parts of an aluminium silicate having a specific surface area of $60m^2/g$ (Sillteg A57 supplied by Degussa), 2 parts of zinc oxide, 1 part of Stearic acid and 2 parts of sulphur were used, and the composition also contained 4 parts of Carbowax 400. The procedure of the comparative example described in Example 1 was repeated except that in the present comparative Example 70 parts of Silteg A57 were used in place of the siliceous clay, 2 parts of zinc oxide, 1 part of stearic acid and 2 parts of sulphur were used, and the composition also contained 4 parts of Carbowax 400 a low molecular weight polyethylene glycol.

The compounded compositions (of Example 3 and of the comparative Example) in the form of sheets were cured by heating at a temperature of 150°C for 8 minutes. The properties of the sheets are given in the following Table III.

TABLE III

|  | Example 3 | Comparison |
|---|---|---|
| Tensile Strength $Kg/cm^2$ | 102 | 98 |
| 100% tensile modulus $Kg/cm^2$ | 22 | 19 |
| 200% tensile modulus $Kg/cm^2$ | 36 | 31 |
| 300% tensile modulus $Kg/cm^2$ | 49 | 43 |
| Elongation at break % | 635 | 639 |
| Tear Strength (angle) (KgF/mm) | 4.47 | 3.83 |

EXAMPLE 4

The procedure of Example 1 was repeated except that 100 parts of a soft kaolin clay (M 100, English China clays) were used in place of the siliceous clay of Example 1, 100 parts of an ethylene-propylene-diene rubber (Intolan 140 A, International Synthetic Rubber) was used in place of the styrene-butadiene rubber of Example 1, 5 parts of zinc oxide, 1 part of stearic acid, 2 parts of sulphur were used, and in place of the accelerators used in Example 1 there was used 1 part of Vulcafor MBTS, 0.75 part of Vulcafor TMTM and 2 parts of Robac ZBUD. The composition also contained 22.5 parts of Dutrex 729 as processing oil.

The composition, which contained 3 parts of polybutadiene-maleic anhydride adduct was compounded in the form of a sheet and was cured by heating at 160°C for 11 $^1$/4 minutes.

In a comparative example the above described procedure was repeated except that the polybutadiene-maleic anhydride adduct was omitted.

The properties of the cured sheets are given in the following Table IV.

### TABLE IV

| | Example 4 | Comparison |
|---|---|---|
| Tensile strength kg/cm$^2$ | 75 | 45 |
| 100% tensile modulus kg/cm$^2$ | 30 | 22 |
| 200% tensile molulus kg/cm$^2$ | 34 | 31 |
| 300% tensile modulus kg/cm$^2$ | 68 | 38 |
| Elongation at break % | 360 | 370 |
| Tear strength (angle) (KgF/mm) | 3.3 | 2.3 |

1.

What we claim is:

1.  A process for the production of a coated
    particulate filler characterised in that
    the process comprises contacting the surface
    of a particulate siliceous filler with an
    acidic group-containing organic polymer,
    which polymer contains at least one unsaturated
    group.

2.  A process as claimed in Claim 1 characterised
    in that the siliceous filler is selected from
    silica and metal silicates.

3.  A process as claimed in Claim 2 characterised
    in that the siliceous filler is an aluminium
    silicate.

4.  A process as claimed in any one of Claims 1
    to 3 characterised in that the siliceous
    filler has a particle size in the range 40
    Angstrom to 1 mm.

5.  A process as claimed in any one of Claims 1
    to 4 characterised in that the acidic group-
    containing organic polymer comprises a
    carboxylic acid group, a salt thereof, or a
    carboxylic acid anhydride group.

6.  A process as claimed in any one of Claims 1
    to 5 characterised in that the acidic group-
    containing organic polymer comprises a
    polymer derived from a diene.

7.  A process as claimed in Claim 6 characterised
    in that the acidic group-containing organic
    polymer is a polydiene carboxylic acidic or
    polydiene carboxylic acid anhydride.

8. A process as claimed in any one of Claims 1 to 7 characterised in that the acidic group-containing organic polymer has a molecular weight in the range 1000 to 5000.

9. A process as claimed in any one of Claims 1 to 8 characterised in that particulate siliceous filler is contacted with a solution of the acidic group-containing organic polymer in a solvent for said polymer.

10. A process as claimed in any one of Claims 1 to 8 characterised in that the particulate siliceous filler is contacted with the acidic group-containing organic polymer in the presence of a matrix organic polymer.

11. A coated siliceous particulate filler characterised in that the surface of the filler is coated with an acid group-containing organic polymer which polymer contains at least one unsaturated group.

12. A coated siliceous particulate filler as claimed in Claim 11 characterised in that the coated particulate siliceous filler comprises 0.2% to 40% by weight of acidic group-containing organic polymer and 99.8% to 60% by weight of particulate filler.

13. A coated siliceous particulate filler as claimed in Claim 11 or Claim 12 characterised in that the siliceous filler is selected from silica and metal silicates.

14. A polymer composition comprising a matrix organic polymer having incorporated therein a particulate siliceous filler characterised in that siliceous filler is coated with an acidic group-containing organic polymer which polymer contains at least one unsaturated group as claimed in any one of Claims 11 to 13.

3.

15. A polymer composition as claimed in Claim 14 characterised in that the composition comprises 5% to 30% of coated filler by weight of the matrix organic polymer.

16. A polymer composition as claimed in Claim 14 or Claim 15 characterised in that the matrix organic polymer is a natural or synthetic rubber.

RD/64/A-02-18
B-02-06

0007190

European Patent Office

**EUROPEAN SEARCH REPORT**

Application number

EP 79 30 1201

## DOCUMENTS CONSIDERED TO BE RELEVANT

| Category | Citation of document with indication, where appropriate, of relevant passages | Relevant to claim |
|---|---|---|
| | PATENT ABSTRACTS OF JAPAN, vol. 1, no. 27, 28-03-1977, page 1315C76<br><br>& JP - A - 51 14 2052 (IDEMITSU KOSAN)<br><br>* The whole abstract * <br><br>-- | 1-16 |
| | CHEMICAL ABSTRACTS, vol. 83, 1975, no. 115988j, page 69 Columbus, Ohio, USA<br><br>& JP - A - 75 27842 (TOYO SODA)<br><br>* The whole abstract *<br>-- | 1-16 |
| | US - A - 3 519 593 (JUSTIN C. BOLGER)<br><br>* Column 3, lines 13-75; examples; claims *<br><br>-- | 1-16 |
| | CHEMICAL ABSTRACTS, vol. 83, 1975, no. 187485g, page 80, Columbus, Ohio USA<br><br>& JP - A - 75 89439 (ASAHI CHEMICAL)<br><br>* The whole abstract *<br><br>---- | 1-16 |

**CLASSIFICATION OF THE APPLICATION (Int. Cl.)**

C 08 K 9/04

**TECHNICAL FIELDS SEARCHED (Int.Cl.)**

C 08 K 9/00
9/04
9/08
9/10

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 12-10-1979 | LENSEN |

EPO Form 1503.1 06.78